# EUROPEAN PATENT SPECIFICATION

(11) **EP 0 616 151 B1**
(45) Date of publication and mention of the grant of the patent: **23.10.1996**
(21) Application number: 94200561.2
(22) Date of filing: 04.03.1994
(51) Int. Cl.: F16H 55/56, F16H 61/00

(54) **Pulley**
Riemenscheibe
Poulie

(30) Priority: 16.03.1993 NL 9300464
(43) Date of publication of application: 21.09.1994
(73) Proprietor: Van Doorne's Transmissie B.V., NL-5000 AM Tilburg (NL)
(72) Inventor: Lamers, Gerardus Johannes Maria, NL-5653 BA Eindhoven (NL); van Spijk, Johannes Gerardus Ludovicus, NL-5151 VD Drunen (NL)
(74) Representative: de Bruijn, Leendert C.

(56) References cited:
- EP-A- 0 389 030
- WO-A-90/01129
- DE-A- 3 428 851
- GB-A- 2 041 116
- US-A- 3 757 594

## Description

The invention relates to a pulley in particular for a continuously variable transmission, provided with at least two discs, which are primarily co-axially installed on a pulley shaft and are fixed against mutual rotation, wherein at least one of the discs is slidable in relation to the shaft by means of displacement means and wherein compensation means are provided to exert a resultant eccentric, axially-directed force between the discs.

Such a pulley is known from WO-A-90/01129. Said known pulley, in particular the compensation means thereof, is rather cumbersome which makes it less suitable for applications wherein the available space is limited.

The object of the invention is to further develop such a pulley. This object is achieved in that at least that part of the shaft lying between the point of application of the resultant force to be exerted by the compensation means and that disc that is nearest to said compensation means are made primarily relatively flexible.

An optimal compensation effect can be realized in case the relatively flexible part of the shaft is thinner than the basic shaft. The slidable disc is preferably at least partially mounted onto the relatively flexible part of the shaft.

According to another feature of the invention, a disc is supported on the shaft by means of a hinge, preferably a ball hinge, to support the operation of the compensation means.

The fixed disc and the shaft can be advantageously rigidly mounted by providing the part of the shaft adjacent to the side of the slidable disc which is furthest away from the fixed disc, with at least two bearings. The first and the second bearings can be connected by a securable torsion-rigid bearing housing.

According to the invention, the compensation means can be equipped to exert a variable resultant eccentric axially-directed force, The first bearing at the location of the fixed disc, possibly surrounded by the fixed disc, and a second bearing at a distance from the fixed disc. Because of this, the resultant force can be adjusted depending on the desired contact pressure and/or the desired point of application.

According to a further elaboration of the invention, the compensation means comprise a power cylinder. By connecting the power cylinder to an operating cylinder of a moveable disc, the following is realized: the prevailing pressure in the power cylinder is the same as, or is a derivative from, the transmission ratio-dependent pressure in the operating cylinder, which is also a measure for the (ec)centric load of a disc. The power cylinder can also be connected to the operating cylinder in an advantageous way by means of a control system.

According to the invention, the power cylinder can operate on a shaft bearing, preferably at some distance from a disc. The assembly can therefore be simply built into a transmission. Moreover, the compensation means can be provided with a lever which by means of a power cylinder or otherwise operates on the shaft, particularly the bearings of the shaft. The lever and the shaft can in this case be connected by means of an elastic hinge-assembly.

With a limited displacement of the power cylinder it is possible to work with quite a large mechanical transmission, since this hardly or never needs to move. The elastic hinges are extremely well-suited to this purpose.

The invention will be explained using a drawing.
Fig. 1 shows a schematic representation of a pulley according to the state of the art and provided with a drive belt;
Fig. 2 shows a schematic representation in longitudinal section of a pair of pulleys according to one embodiment of the invention, and
Fig. 3 shows a schematic representation of an embodiment of the compensation means.

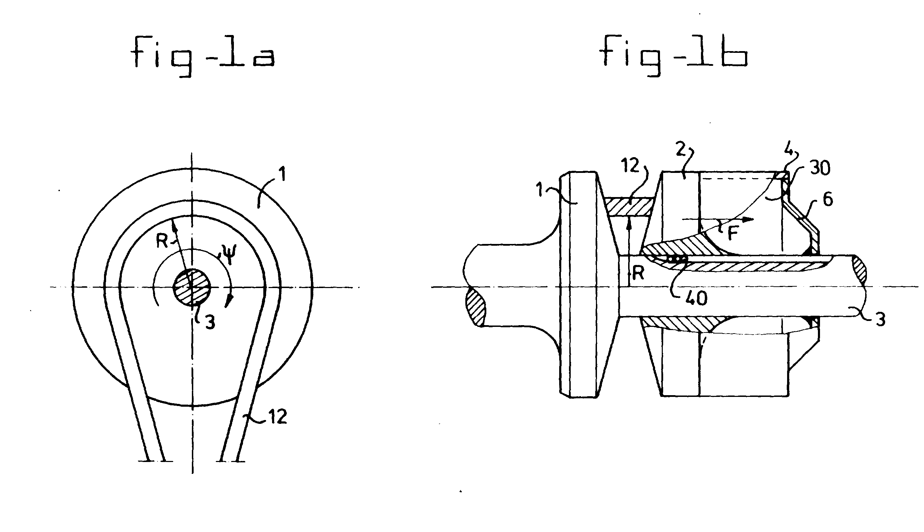

Figure 1 represents schematically a prior art pulley with discs 1 and 2. Drive belt 12 is taken up between the discs 1 and 2. The disc 1 is fixed on the pulley shaft 3, while the pulley disc 2 is fixed against rotation on, but is axially slidable along, shaft 3. In a known way, disc 2 is provided with an operating cylinder 30 with cylinder wall 4 and piston 6. By changing either the pressure in the cylinder or the discharge flow through the cylinder, as known, the axial position of disc 2 in relation to shaft 3 and disc 1 can be adjusted. The distance **R** of the drive belt from the centre line of shaft 3 is dependent on the momentaneous transmission ratio of, for example, a continuously variable transmission, in which the pulley/drive belt assembly is installed. It is however clear that the drive belt 12 is always situated radially outwards from shaft 3. In this case the drive belt 12 only makes contact with the discs 1, 2 over the circle segment Ψ. The distributed load exterted by the drive belt onto discs 1 and 2 produces a resultant force **F** on the discs 1, 2. The discs 1, 2 and especially shaft 3 will therefore deform somewhat. Due to the deformation, constant contact pressure between the discs 1, 2 and the drive belt 12 will not be achieved. The load on drive belt 12 will increase locally and the lifetime will decrease. Furthermore, in some cases, in order to compensate for the phenomenon, the pressure in the operating cylinder is increased, as a result of which the efficiency of the transmission decreases.

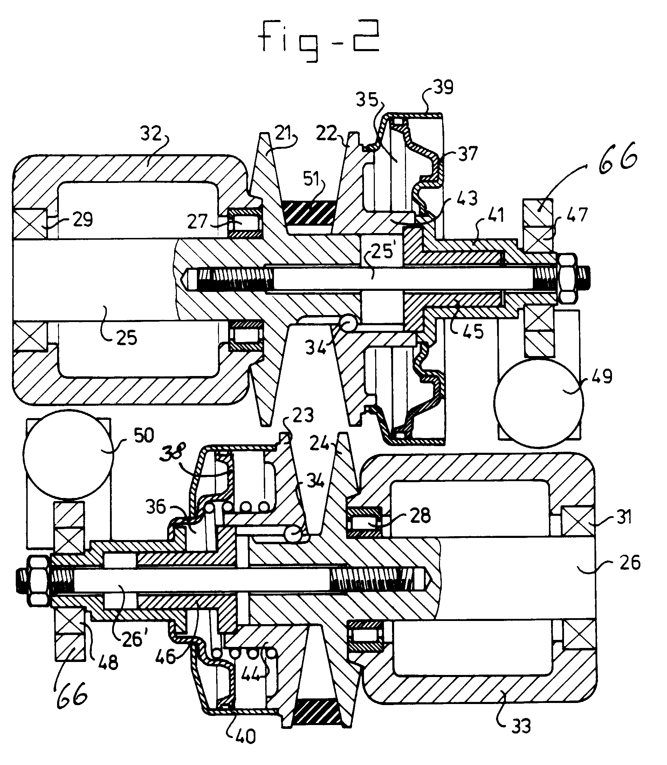

In figure 2, a pair of pulleys with discs 21, 22 and 23, 24 are represented. The fixed discs 21 and 24 are mounted on shafts 25 and 26 respectively. The shafts 25 and 26 are provided with bearings 27 and 28 respectively, at the position of, and in this case partially enclosed by, the fixed discs 21 and 24 respectively. Moreover, the shafts 25 and 26 are provided with tail bearings 29 and 31. The bearings 27 and 29, and 28 and 31 respectively are incorporated into torsion-rigid bearing housings 32 and 33 respectively, which, for example, can again be incorporated into the housing and/or be mutually rigidly connected.

Because of these measures, the fixed discs 21 and 24 are optimally mounted on and supported by the shafts 25 and 26 respectively, so that these discs undergo a minimal displacement and tilting.

The two slidable discs 22, 23 comprise moreover operating cylinders 35 and 36 respectively, of which the pistons 37 and 38 respectively cooperate with the cylinder walls 39 and 40 respectively on the one side, and on the other side are fixed to the hollow shafts 41 and 42. The hollow shafts 41 and 42 are fixed on the thin extremities 25' and 26' respectively of the shafts 25 and 26 respectively, which in this case are made by the bolts fastened in the shafts 25 and 26 respectively. The bosses 43 and 44 of the discs 22 and 23 respectively are mounted on the shafts 25 and 26 respectively in both radial and tangential directions, also by means of the ball hinges 34, and are permanently connected with the shaft parts 45 and 46 respectively which are journalled in the hollow shafts 41 and 42 respectively. In this way, the discs 22 and 23 are connected with the thinner and therefore more flexible extremities 25' and 26' respectively of the shafts 25 and 26 respectively, as a result of which a suitable construction for power transmission and power compensation is obtained.

The hollow shafts 41 and 42, fixed on the shaft extremities 25' and 26' are provided with bearings 47 and 48 respectively. The compensation means 49 and 50 respectively operate on these bearings 47 and 48, and exert a variable resultant radial force on the shafts 25 and 26 respectively. Because of this, a moment is exerted on the slidable discs 22 and 23 respectively. A resultant eccentric axially-directed force between the discs 21 and 22, and 23 and 24 respectively is the outcome. This eccentric force between the discs works together with the axial centric pressure of the operating cylinders 35 and 36 respectively, as a result of which the desired contact pressure for the drive belt between the discs is obtained. In addition to this, the invention can also be applied in combination with pressure means, among which operating cylinders which realize an axial eccentric contact pressure for the drive belt between the discs, such as is described for example in the American patent 5,013,283.

Because a deformation of the discs 22 and 23 and the shafts 25 and 26 respectively, caused by drive belt 51, is dependent on the radial position of the drive belt 51 in the pulleys and/or the transmission ratio of a continuously variable transmission, the compensation means can yield a variable force according to size and position. This can for example be achieved with a power cylinder which for example, can be (hydraulically) connected, if required via a control system, to operating cylinders 35 and 36 respectively. The possible control system can in this case adjust the pressure as desired.

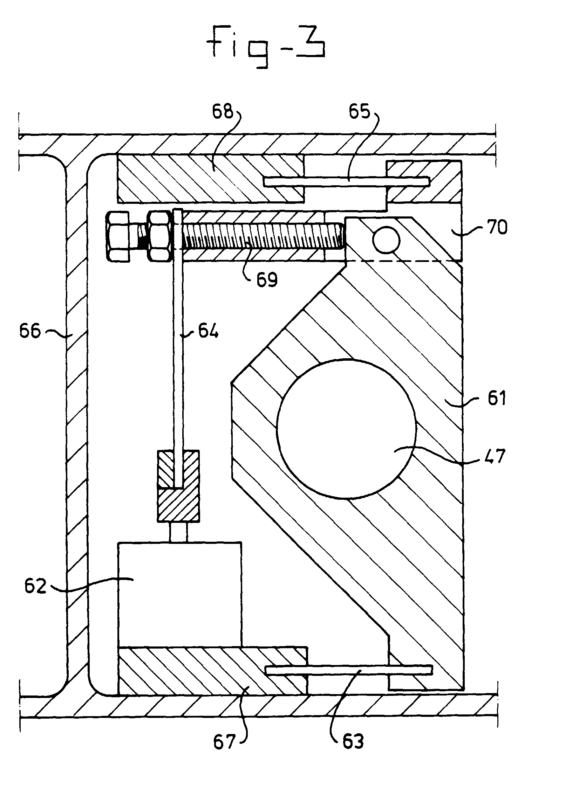

An embodiment of the compensation means according to the invention is represented in figure 3. The compensation means comprise a lever 61 in which the bearing 47 is incorporated. The lever 61 with the pulling cylinder 62 exerts its action in a system of elastic hinges and levers, in this case, the said lever 61 and the lever 70. The lever 70 is connected to the housing by means of the leaf springs 65 and the block 68 and to the pulling cylinder 62, referred to as power cylinder in the claims, by means of the leaf spring 64. The lever 61 is connected to the housing 66 by means of the leaf spring 63 and the block 67.

Moreover, an adjustment bolt 69 provides for such a fine adjustment of the compensation means that the shafts 25' and 26' respectively are either not bent or are hardly bent during operation. Because of this embodiment, a robust bearing is achieved, wherein with only a limited displacement of the pulling cylinder 62, an optimal resultant and variable force is achieved.

It will be clear that the invention is not limited to the represented embodiment forms of the invention, but that within the framework of the invention, many more embodiments are conceivable that are considered to fall under the idea of this invention. By way of example, both discs of the pulley can be mounted on the shaft so that they can slide.

## Claims

1. Pulley, in particular for a continuously variable transmission, provided with at least two discs (21, 22; 23, 24), which are primarily co-axially installed on a pulley shaft (25; 26) and are fixed against mutual rotation, wherein at least one of the discs (22; 23) is slidable in relation to the pulley shaft (25; 26) by means of displacement means (35; 36) and wherein compensation means (49; 50) are provided to exert a resultant eccentric, axially-directed force between the two discs (21, 22; 23, 24), characterized in that at least that part (25'; 26') of the pulley shaft (25; 26) lying between the point of application of the resultant force to be exerted by the compensation means (49; 50) and that disc that is nearest to said compensation means is made primarily relatively flexible.

2. Pulley according to claim 1, characterized in that the relatively flexible part (25'; 26') of the pulley shaft is thinner than the basic part of the pulley shaft (25; 26).

3. Pulley according to claim 1 or 2, characterized in that the slidable disc (22; 23) is at least partially mounted onto the relatively flexible part (25'; 26') of the pulley shaft.

4. Pulley according to one of the preceding claims, characterized in that at least one of the two discs (21, 22; 23, 24) is supported on the pulley shaft by means of a hinge.

5. Pulley according to claim 4, characterized in that the hinge comprises a ball hinge.

6. Pulley according to one of the preceding claims, characterized in that the other disc (21; 24) of said at least two discs (21, 22; 23, 24) is fixed on the pulley shaft, and the pulley shaft facing away from the fixed disc (21; 24) is provided with at least two bearings (27, 29; 28, 31).

7. Pulley according to claim 6, characterized in that a first bearing (27; 28) is installed at the position of the fixed disc (21; 24) and a second bearing (29; 31) is installed at a distance from said fixed disc.

8. Pulley according to claim 7, characterized in that the first and the second bearing (27 and 29; 28 and 31) are connected by a torsion-rigid bearing housing (32; 33) that is securable.

9. Pulley according to one of the claims 7 to 8, characterized in that the first bearing (27; 28) is at least partially enclosed by the fixed disc (21; 24).

10. Pulley according to one of the preceding claims, characterized in that the compensation means are equipped to exert a variable resultant eccentric radially-directed force.

11. Pulley according to one of the preceding claims, characterized in that the compensation means comprise a power cylinder (62).

12. Pulley according to claim 11, characterized in that the displacement means comprise an operating cylinder (35; 36) and that the operating cylinder and the power cylinder (62) are mutually connected.

13. Pulley according to claim 12, characterized in that the operating cylinder (35; 36) and the power cylinder (62) are connected by means of a control system.

14. Pulley according to one of the claims 11, 12 or 13, characterized in that the power cylinder (62) operates on a bearing (47; 48) of the pulley shaft (25; 26).

15. Pulley according to claim 14, characterized in that said bearing (47; 48) lies at a distance from the slidable disc (22; 23).

16. Pulley according to one of the preceding claims, characterized in that the compensation means comprise at least one lever.

17. Pulley according to claim 16, characterized in that said power cylinder (62) operates on said at least one lever.

18. Pulley according to claim 16 or 17, characterized in that said bearing (47; 48) is connected to said at least one lever.

19. Pulley according to one of the preceding claims, characterized in that the compensation means comprise an elastic hinge assembly.

20. Pulley according to claim 19, characterized in that the power cylinder (62) and said at least one lever are connected by means of elastic hinges and said at least one lever operates on the pulley shaft.

21. Pulley according to one of the preceding claims, characterized in that said slidable disc is provided with pressure means for a centrical or eccentric axial pushing of the disc.

## Patentansprüche

1. Riemenscheibe, insbesondere für ein stufenloses Getriebe, die mit mindestens zwei Scheiben (21, 22; 23, 24) versehen ist, die primär gleichachsig auf einer Riemenscheibenwelle (25; 26) angeordnet und gegen Drehung zueinander feststehend sind, wobei mindestens eine der Scheiben (22; 23) gegenüber der Riemenscheibenwelle (25; 26) durch eine Verschiebungseinrichtung (35; 36) verschiebbar ist, und wobei eine Ausgleicheinrichtung (49; 50) vorgesehen ist, um eine resultierende exzentrische, axial gerichtete Kraft zwischen den beiden Scheiben (21, 22; 23, 24) auszuüben, dadurch gekennzeichnet, daß mindestens jener Teil (25'; 26') der Riemenscheibenwelle (25; 26), der zwischen dem Angriffspunkt der durch die Ausgleicheinrichtung (49; 50) auszuübenden resultierenden Kraft und jener Scheibe liegt, die der Ausgleicheinrichtung am nächsten ist, primär relativ flexibel gestaltet ist.

2. Riemenscheibe nach Anspruch 1, dadurch gekennzeichnet, daß der relativ flexible Teil (25'; 26') der Riemenscheibenwelle dünner als der Hauptteil der Riemenscheibenwelle (25; 26) ist.

3. Riemenscheibe nach Anspruch 1 oder 2, dadurch gekennzeichnet, daß die verschiebbare Scheibe (22; 23) mindestens teilweise auf dem relativ flexiblen Teil (25'; 26') der Riemenscheibenwelle angeordnet ist.

4. Riemenscheibe nach einem der vorausgegangenen Ansprüche, dadurch gekennzeichnet, daß mindestens eine der Scheiben (21, 22; 23, 24) auf der Riemenscheibenwelle durch ein Gelenk gelagert ist.

5. Riemenscheibe nach Anspruch 4, dadurch gekennzeichnet, daß das Gelenk ein Kugelgelenk aufweist.

6. Riemenscheibe nach einem der vorausgegangenen Ansprüche, dadurch gekennzeichnet, daß die andere Scheibe (21; 24) der mindestens zwei Scheiben (21, 22; 23, 24) auf der Riemenscheibenwelle feststehend ist, und die von der festen Scheibe (21; 24) wegweisende Riemenscheibenwelle mit mindestens zwei Lagern (27, 29; 28, 31) versehen ist.

7. Riemenscheibe nach Anspruch 6, dadurch gekennzeichnet, daß ein erstes Lager (27; 28) an der Position der festen Scheibe (21; 24) angeordnet und ein zweites Lager (29; 31) in einem Abstand von der festen Scheibe angeordnet ist.

8. Riemenscheibe nach Anspruch 7, dadurch gekennzeichnet, daß das erste und das zweite Lager (27 und 29; 28 und 31) durch ein drehsteifes Lagergehäuse (32; 33) verbunden sind, das feststellbar ist.

9. Riemenscheibe nach einem der Ansprüche 7 bis 8, dadurch gekennzeichnet, daß das erste Lager (27; 28) mindestens teilweise von der festen Scheibe (21; 24) umgeben ist.

10. Riemenscheibe nach einem der vorausgegangenen Ansprüche, dadurch gekennzeichnet, daß die Ausgleicheinrichtung so ausgestattet ist, daß sie eine variable resultierende exzentrische, radial gerichtete Kraft ausübt.

11. Riemenscheibe nach einem der vorausgegangenen Ansprüche, dadurch gekennzeichnet, daß die Ausgleicheinrichtung einen Kraftzylinder (62) aufweist.

12. Riemenscheibe nach Anspruch 11, dadurch gekennzeichnet, daß die Verschiebungseinrichtung einen Betätigungszylinder (35; 36) aufweist und daß der Betätigungszylinder und der Kraftzylinder (62) miteinander verbunden sind.

13. Riemenscheibe nach Anspruch 12, dadurch gekennzeichnet, daß der Betätigungszylinder (35; 36) und der Kraftzylinder (62) durch ein Steuersystem verbunden sind.

14. Riemenscheibe nach einem der Ansprüche 11, 12 oder 13, dadurch gekennzeichnet, daß der Kraftzylinder (62) auf ein Lager (47; 48) der Riemenscheibenwelle (25; 26) wirkt.

15. Riemenscheibe nach Anspruch 14, dadurch gekennzeichnet, daß das Lager (47; 48) in einem Abstand von der verschiebbaren Scheibe (22; 23) liegt.

16. Riemenscheibe nach einem der vorausgegangenen Ansprüche, dadurch gekennzeichnet, daß die Ausgleicheinrichtung mindestens einen Hebel aufweist.

17. Riemenscheibe nach Anspruch 16, dadurch gekennzeichnet, daß der Kraftzylinder (62) auf den mindestens einen Hebel wirkt.

18. Riemenscheibe nach Anspruch 16 oder 17, dadurch gekennzeichnet, daß das Lager (47; 48) mit dem mindestens einen Hebel verbunden ist.

19. Riemenscheibe nach einem der vorausgegangenen Ansprüche, dadurch gekennzeichnet, daß die Ausgleicheinrichtung eine elastische Gelenkbaugruppe aufweist.

20. Riemenscheibe nacht Anspruch 19, dadurch gekennzeichnet, daß der Kraftzylinder (62) und der mindestens eine Hebel durch elastische Gelenke verbunden sind und der mindestens eine Hebel auf die Riemenscheibenwelle wirkt.

21. Riemenscheibe nach einem der vorausgegangenen Ansprüche, dadurch gekennzeichnet, daß die verschiebbare Scheibe mit einer Druckeinrichtung für ein zentrisches oder exzentrisches Schieben der Scheibe versehen ist.

## Revendications

1. Poulie, notamment pour une transmission continûment variable, équipée d'au moins deux disques (21,22;23, 24), qui sont montées principalement coaxialement sur un arbre de poulie (25;26) et sont bloquées contre toute rotation réciproque, et dans laquelle au moins l'un des disques (22;23) peut glisser par rapport à l'arbre (25;26) de la poulie sous l'action de moyens de déplacement (35;36), et dans laquelle des moyens de compensation (49;50) sont prévus pour appliquer une force excentrique résultante, dirigée axialement, entre les deux disques (21,22;23,24), caractérisée en ce qu'au moins la partie (25';26') de l'arbre (25;26) de la poulie, qui est située entre le point d'application de la force résultante devant être appliquée par les moyens de compensation (49;50) et le disque qui est le plus proche desdits moyens de compensation est réalisée principalement de manière à être relativement flexible.

2. Poulie selon la revendication 1, caractérisée en ce que la partie relativement flexible (25';26') de l'arbre de la poulie est plus mince que la partie de base de l'arbre (25;26) de la poulie.

3. Poulie selon la revendication 1 ou 2, caractérisé en ce que le disque coulissant (22;23) est monté au moins partiellement sur la partie relativement flexible (25';26') de l'arbre de la poulie.

4. Poulie selon l'une quelconque des revendications précédentes, caractérisée en ce qu'au moins l'un des deux disques (21,22;23,24) est supporté sur l'arbre de la poulie par au moins une charnière.

5. Poulie selon la revendication 4, caractérisée en ce que la charnière comprend une charnière à rotule.

6. Poulie selon l'une des revendications précédentes, caractérisée en ce que l'autre disque (21;24) parmi lesdits au moins deux disques (21,22;23,24) est fixé sur l'arbre de la poulie, et que l'arbre de la poulie, tourné à l'opposé du disque fixé (21;24) est équipé d'au moins deux paliers (27,29;28,31).

7. Poulie selon la revendication 6, caractérisée en ce qu'un premier palier (27;28) est installé dans la position du disque fixe (21;24) et qu'un second palier (29;31) est installé à distance dudit disque fixe.

8. Poulie selon la revendication 7, caractérisée en ce que les premier et second paliers (27 et 29; 28 et 31) sont raccordés par un boîtier de palier (32;33) résistant à la torsion et qui peut être bloqué.

9. Poulie selon l'une des revendications 7 à 8, caractérisée en ce que le premier palier (27;28) est entouré au moins partiellement par le disque fixe (21;24).

10. Poulie selon l'une des revendications précédentes, caractérisée en ce que les moyens de compensation sont équipés de manière à appliquer une force excentrique résultante variable dirigée radialement.

11. Poulie selon l'une des revendications précédentes, caractérisée en ce que les moyens de compensation comprennent un vérin de puissance (62).

12. Poulie selon la revendication 11, caractérisée en ce que les moyens de déplacement comprennent un vérin d'actionnement (35;36) et que le vérin d'actionnement et le vérin de puissance (62) sont raccordés l'un à l'autre.

13. Poulie selon la revendication 12, caractérisée en ce que le vérin d'actionnement (35;36) et le vérin de puissance (62) sont raccordés au moyen d'un système de commande.

14. Poulie selon l'une des revendications 11, 12 ou 13, caractérisée en ce que le vérin de puissance (62) agit sur un palier (47;48) de l'arbre (25;26) de la poulie.

15. Poulie selon la revendication 14, caractérisée en ce que ledit palier (47;48) est situé à distance du disque coulissant (22;23).

16. Poulie selon l'une des revendications précédentes, caractérisée en ce que les moyens de compensation comprennent au moins un levier.

17. Poulie selon la revendication 16, caractérisé en ce que ledit vérin de puissance (62) agit sur ledit au moins un levier.

18. Poulie selon la revendication 16 ou 17, caractérisé en ce que ledit palier (47;48) est raccordé audit au moins un levier.

19. Poulie selon l'une des revendications précédentes, caractérisée en ce que les moyens de compensation comprennent un ensemble formant charnières élastiques.

20. Poulie selon la revendication 19, caractérisée en ce que le vérin de puissance (62) et ledit au moins un levier sont raccordés au moyen de charnière élastique et que ledit au moins un levier agit sur l'arbre de la poulie.

21. Poulie selon l'une des revendications précédentes, caractérisée en ce que ledit disque coulissant est équipé de moyens de pression permettant d'appliquer une poussée axiale centrée ou excentrée au disque.
